# EUROPÄISCHE PATENTSCHRIFT

(11) **EP 0 307 741 B1**
(45) Veröffentlichungstag und Bekanntmachung des Hinweises auf die Patenterteilung: **18.11.1993**
(21) Anmeldenummer: 88114405.9
(22) Anmeldetag: 03.09.1988
(51) Int. Cl.: F16F 13/00

(54) **Hydraulisch dämpfendes Zweikammer-Motorlager**
Hydraulically damping two-chamber engine mounting
Support de moteur à amortissement hydraulique à deux chambres

(30) Priorität: 18.09.1987 DE 3731495
(43) Veröffentlichungstag der Anmeldung: 22.03.1989
(73) Patentinhaber: METZELER GIMETALL AG, D-80992 München (DE)
(72) Erfinder: Bitschkus, Horst, D-5411 Hilgert (DE); Nelles, Uwe, D-5300 Bonn 3 (DE); Hofmann, Manfred, D-6257 Hünfelden (DE); Siewert, Günter, D-5419 Deesen (DE); Klöckner, Karl-Heinz, D-5414 Niederwerth (DE)
(74) Vertreter: Seibert, Hannelore

(56) Entgegenhaltungen:
- EP-A- 0 027 751
- EP-A- 0 040 290
- EP-A- 0 164 081
- EP-A- 0 265 681
- FR-A- 2 536 143
- FR-A- 2 587 774
- PATENT ABSTRACTS OF JAPAN, Band 8, Nr. 152 (M-309)[1589], 14 Juli 1984;& JP-A-59 47 541 (TOUKAI GOMU KOGYO K.K.)

## Beschreibung

Die Erfindung bezieht sich auf ein hydraulisch dämpfendes Zweikammer-Motorlager mit einer motorseitigen Arbeitskammer und einer durch eine Zwischenplatte abgetrennten Ausgleichskammer, wobei Arbeitskammer und Ausgleichskammer über zwei axial übereinanderliegende, in den zylindrischen Außenumfang der Zwischenplatte eingeschnittene und über einen schräg zur Längsachse verlaufenden Kanalabschnitt verbundene Kanäle miteinander in Verbindung stehen, wobei die Kanäle von der Innenwandung des zylindrisch ausgebildeten Lagergehäuses als außenliegende Kanalwandung abgedeckt sind und wobei die Enden der übereinanderliegenden Kanäle über entsprechende Durchbrüche in der Zwischenplatte einerseits mit der Arbeitskanmer und andererseits mit der Ausgleichskammer in Verbindung stehen.

Eine derartige Kanalkonfiguration in einem Lager ist aus der FR-A-2 587 774 bekannt. Das hier dargestellte Lager dient jedoch im wesentlichen zur elastischen Abstützung von Federbeinen und nicht als hydraulisch dämpfendes Motorlager, das zwischen einem abstützenden Motor und der Karosserie angeordnet ist. Darüberhinaus weist diese Konstruktion den Nachteil auf, daß die Zwischenplatte, die zwischen der eigentlichen Arbeitskammer und der Ausgleichskammer angeordnet ist, mindestens die gleiche Höhe aufweist wie die übereinanderliegenden Überströmkanalabschnitte. Durch diese erhebliche Dicke der Zwischenplatte, die der Höhe der beiden Überströmkanäle sowie der dazwischen stehenbliebenden Materialschichten entspricht, wird einmal das zur Verfügung stehende Kammervolumen von Ausgleichskammer und Arbeitskammer erheblich beschränkt oder aber es ist zur Erreichung einer optimalen Wirkungsweise und damit Beibehaltung des gleichen Kammervolumens erforderlich, die Gesamthöhe des Lagers entsprechend zu vergrößern. Dies ist jedoch oftmals nicht möglich, da der zur Verfügung stehende freie Raum zum Einbau eines derartigen Motorlagers stets sehr beschränkt und konstruktionsmäßig vom Fahrzeughersteller vorgegeben ist.

Darüberhinaus ist es aus der EP-A-0 040 290 bekannt, in einer Zwischenplatte einen ebenen ringförmigen Kanal vorzusehen, wobei die Zwischenplatte zweigeteilt ist, um einen solchen Überströmkanal überhaupt herstellen zu können, da dieser innerhalb der Zwischenplatte verläuft, wobei die eine Kanalhälfte in das Unterteil der Platte und die andere Kanalhälfte in das Oberteil der Platte eingeschnitten ist.

Der vorliegenden Erfindung liegt demgegenüber die Aufgabe zugrunde, ein Zweikammer-Motorlager zu schaffen, das einen Überströmkanal sehr großer Länge enthält, so daß damit auch niederfrequentere Schwingungen optimal gedämpft werden können, wobei jedoch auch bei einer mehrwendeligen Ausbildung des Überströmkanals sich die eigentliche Bauhöhe des Lagers nicht zusätzlich erhöht.

Zur Lösung dieser Aufgabe ist erfindungsgemäß vorgesehen, daß die Zwischenplatte zweiteilig identisch ausgebildet ist derart, daß jede Zwischenplattenhälfte eine ebene Grundplatte und einen am Außenumfang aufgesetzten, sich nach einer Seite axial erstreckenden zylindrischen Ring aufweist, in dessen Außenfläche über einen Teilumfang jeweils einer der nach außen offenen Kanäle eingeschnitten sind, die jeweils an einem Ende schräg im Winkel zur Lagerlängsachse abgewinkelt sind und den Rand der Grundplatte schräg anschneiden, und die am anderen Ende radial in eine tangential den Innenumfang des zylindrischen Ringes anschneidende Austrittsöffnung übergehen, welche Austrittsöffnungen die Durchbrüche in der Zwischenplatte bilden, wobei die Zwischenplattenhälften spiegelbildlich mit ihren Grundplattenhälften derart aufeinandergesetzt sind, daß die schräg zur Längsachse verlaufenden Kanalabschnitte miteinander fluchten.

Durch diese Anordnung zweier ringförmig übereinanderliegender Kanalabschnitte und ihrer Anordnung auf dem größtmöglichen Durchmesser der Zwischenplatte ist es also möglich, Kanallängen zu verwirklichen, die eine optimale Dämpfung bei erheblich niedrigeren Frequenzen ergeben, als das bisher mit Kanälen in einer Ebene möglich war. Außerdem ist die Kanalanordnung und Gestaltung so getroffen, daß dadurch keine Vergrößerung der Bauhöhe des Motorlagers erforderlich ist.

Weitere zweckmäßige Ausgestaltungen sind in den Unteransprüchen genannt.

Anhand einer schematischen Zeichnung sind Aufbau und Wirkungsweise von Ausführungsbeispielen nach der Erfindung näher erläutert. Dabei zeigen
- Fig. 1: einen Längsschnitt durch ein derartiges Lager,
- Fig. 2: eine Seitenansicht einer Zwischenplattenhälfte,
- Fig. 3: einen Längsschnitt durch eine derartige Zwischenplattenhälfte,
- Fig. 4: eine Aufsicht auf eine derartige Zwischenplatte mit teilweise freigeschnittenen Kanalenden und
- Fig. 5: eine Seitenansicht einer komplettierten Zwischenplatte aus zwei Zwischenplattenhälften.

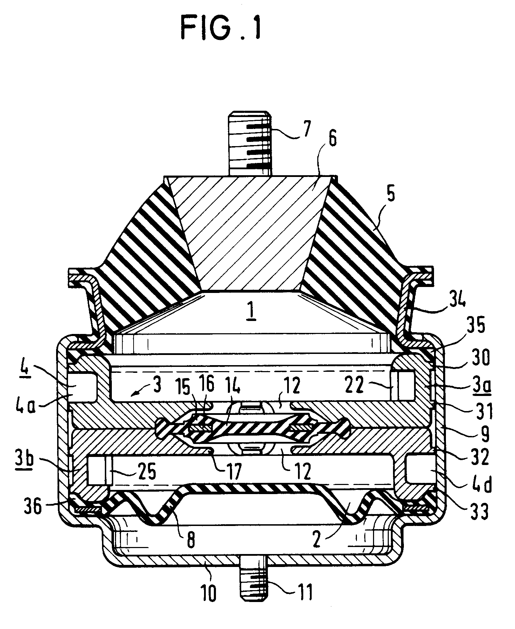

Wie aus Fig. 1 zu ersehen ist, weist das Zweikammer-Motorlager zunächst in herkömmlicher Weise eine obere motorseitige Arbeitskammer 1 und eine untere Ausgleichskammer 2 auf, die über einen, in der noch zu beschreibenden Zwischenplatte 3 verlaufenden Überströmkanal 4 miteinander in Verbindung stehen. Die obere Arbeitskammer 1 wird von einer starkwandigen hohlkegelförmigen Kammerwandung 5, der sogenannten Tragfeder begrenzt, die an der oberen Stirnseite eine Lagerplatte 6 mit einem Bolzen 7 zur Festlegung am nicht näher dargestellten Motor aufweist. Die untere Kammer 2 ist von einer beispielsweise tassenförmigen Kammerwandung 8 aus ebenfalls gummielastischem, jedoch weicheren Material also das der Kammerwandung 5 gebildet. Alle Lagerteile sind über ein zylindrisches Gehäuse 9 flüssigkeitsdicht miteinander verspannt, wobei das Gehäuse 9 gleichzeitig den unteren Gehäusedeckel 10 mit einem Anschlußbolzen 11 zum Festlegen des Lagers an der Fahrzeugkarosserie mit umfaßt.

Wie aus der Figur ersichtlich ist, besteht die Lagerplatte 3 aus zwei identischen, spiegelbildlich zusammengesetzten Lagerplattenhälften 3a und 3b, die nachfolgend im einzelnen näher beschrieben werden.

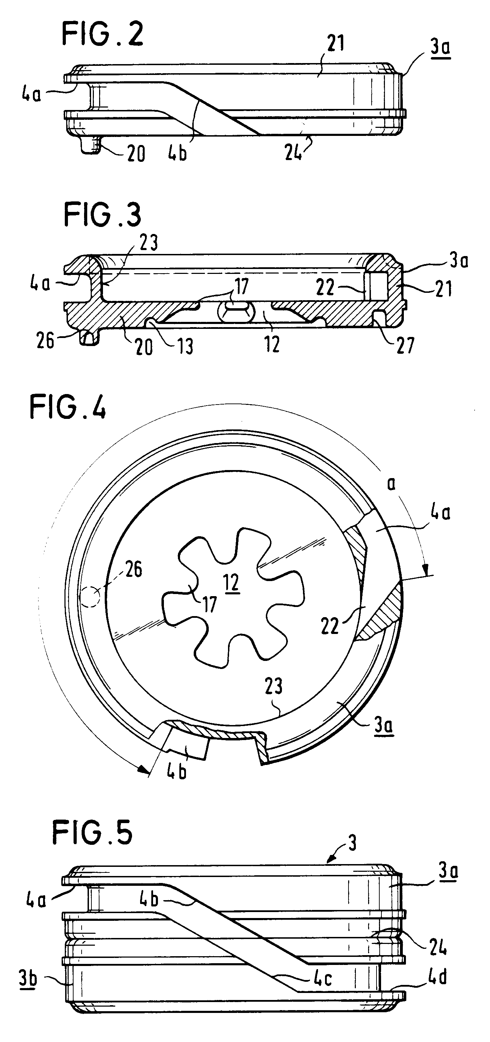

Wie aus den Fig. 2, 3 und 4 zu ersehen ist, besteht die obere Lagerplattenhälfte 3a aus einer ebenen Grundplatte 20, die am äußeren Umfang nach einer Seite in einen zylindrischen Ring 21 übergeht. In die Außenumfangsfläche dieses Ringes 21 ist nunmehr über den Umfangsbereich a (entsprechend Fig. 4) ein nach außen offener Kanal 4a eingeschnitten, der sich nach dem dargestellten Ausführungsbeispiel etwa über 270° erstreckt. An einem Ende mündet der Kanal 4a mit einer tangential gerichteten Öffnung 22 am Innenumfang 23 des Ringes 21, während er am anderen Ende abgewinkelt schräg zur Lagerlängsachse als Kanalabschnitt 4b in Richtung auf die Grundfläche 24 der Bodenplatte 20 weiterläuft und diese Grundfläche 24 frei anschneidet.

Wenn man nun zwei derartige, identisch aufgebaute Lagerplattenhälften 3a und 3b an ihrer Grundfläche 24 zusammenfügt, ergibt sich in der Seitenansicht ein Kanalverlauf und eine Lagerplatte 3 entsprechend Fig. 5. Zur optimalen Zuordnung und Arretierung der beiden Zwischenplattenhälften 3a und 3b sind dabei gem. Fig. 3 unter der Grundplatte 20 noch ein Stift 26 und eine entsprechende Ausnehmung 27 vorgesehen, wobei beim spiegelbildlichen Zusammenbau zweier Plattenhälften der Stift 26 der einen Platte in die Ausnehmung 27 der anderen Platte und umgekehrt eingreifen. In Zusammenschau mit dem Längsschnitt nach Fig. 1 erstreckt sich also der Kanal 4 zunächst von einer tangential nach innen gerichteten Eintrittsöffnung 22 in der Arbeitskammer 1 über den horizontalen Kanalabschnitt 4a in der oberen Zwischenplattenhälfte 3a bis zu den schräg verlaufenden und fluchtend aneinanderstoßenden Kanalabschnitten 4b und 4c, um dann im anschließenden horizontalen Kanalabschnitt 4d in der unteren, spiegelbildlich angesetzten Zwischenplattenhälfte 3b an der ebenfalls tangential nach innen gerichteten Austrittsöffnung 25 in die Ausgleichskammer 2 auszumünden.

Die zunächst nach außen offenen Kanalabschnitte 4a, b, c und d werden dabei beim Zusammenbau des Lagers von der Innenwandung des Gehäuses 9 seitlich abdichtend abgedeckt, so daß die Gehäusewandung 9 praktisch die vierte Kanalseite bildet. Damit liegt aber der Kanal 4 auch auf einem Kreis bzw. einer Wendel mit größtmöglich realisierbaren Durchmesser - natürlich bei vorgegebenem Außendurchmesser der Lagers.

Kritisch ist dabei die Abdichtung der aufgepreßten Gehäusewandung 9 zum Umfang der beiden Zwischenplattenhälften 3a und 3b, insbesondere wenn die Teile nicht exakt rund sind und da hier Metall auf Metall liegt. Zur Abdichtung weisen daher zunächst die Zwischenplattenhälften 3a und 3b geringfügig erhöhte, umlaufende Stege 30 und 31 bzw. 32 und 33 auf, gegen die beim Aufrollen des Gehäuses 9 dieses gepreßt wird und damit schon eine hinreichende Dichtigkeit gewährleistet.

Zusätzlich ist zwischen der äußeren Oberkante der Zwischenplattenhälfte 3a und der nach innen gerollten Kante des Gehäuses 9 bzw. dem Umfangsring 34 der Tragfeder 5 ein axial und radial abdichtender Ring 35 vorgesehen, der einstückig mit der Tragfeder 5 ausgebildet sein kann. In gleicher Weise ist an der äußeren Unterkante der Zwischenplattenhälfte 3b ein Ring 36 vorgesehen, der den Spalt zum Gehäuse 9 bzw. Deckel 10 und Ausgleichskammer 2 axial und radial abdichtet. Dieser Ring 36 kann ebenfalls einstückig mit der Kammerwandung 8 ausgeführt sein.

Bei dem dargestellten Ausführungsbeispiel ergibt sich somit ein Überströmkanal mit einem Umfangswinkel von etwa 540°. Bei entsprechender Verlängerung oder Verkürzung der horizontal verlaufenden Abschnitte in den beiden Zwischenplattenhälften 3a und 3b läßt sich jedoch auch jede andere gewünschte Kanallänge über einen Winkel von bis zu 700° erreichen.

Die beiden Zwischenplattenhälften 3a und 3b können dabei noch eine zentrale Öffnung 12 aufweisen, in der zwischen entsprechenden Hinterschneidungen 13 am Außenumfang der Öffnung 12 eine in Fig. 1 zu ersehende gummielastische Membran 14 zur Entkopplung von Schwingungen kleiner Amplitude und hoher Frequenz eingeklemmt ist. Diese Membran 14 kann in herkömmlicher Weise als ebene Platte, oder wie bei dem dargestellten Ausführungsbeispiel mit einem verstärkten Ringbereich 15 und einem eingelegten Versteifungsring 16 ausgebildet sein, wobei übergreifende Stege 17 eine Wegbegrenzung bei Überschreiten einer vorgegebenen Schwingungsamplitude bewirken.

Mit der beschriebenen Ausbildung der Zwischenplatte ist es also auf einfache Weise möglich, auch Kanäle großer Länge über einen Umfangswinkel von mindestens 360° zu verwirklichen, wobei darüber hinaus auch ein relativ großer Kanalquerschnitt beibehalten werden kann.

## Patentansprüche

1. Hydraulisch dämpfendes Zweikammer-Motorlager mit einer motorseitigen Arbeitskammer (1) und einer durch eine Zwischenplatte (3) abgetrennten Ausgleichskammer (2), wobei Arbeitskammer (1) und Ausgleichskammer (2) über zwei axial übereinanderliegende, in den zylindrischen Außenumfang der Zwischenplatte (3) eingeschnittene und über einen schräg zur Längsachse verlaufenden Kanalabschnitt (4b, 4c) verbundene Kanäle (4a, 4d) miteinander in Verbindung stehen, wobei die Kanäle (4a, 4d) von der Innenwandung des zylindrisch ausgebildeten Lagergehäuses (9) als außenliegende Kanalwandung abgedeckt sind und wobei die Enden der übereinanderliegenden Kanäle (4a, 4d) über entsprechende Durchbrüche (22, 25) in der Zwischenplatte (3) einerseits mit der Arbeitskammer (1) und andererseits mit der Ausgleichskammer (2) in Verbindung stehen, dadurch gekennzeichnet, daß die Zwischenplatte (3) zweiteilig identisch ausgebildet ist derart, daß jede Zwischenplattenhälfte (3a, 3b) eine ebene Grundplatte (20) und einen am Außenumfang aufgesetzten, sich nach einer Seite axial erstreckenden zylindrischen Ring (21) aufweist, in dessen Außenfläche über einen Teilumfang jeweils einer der nach außen offenen Kanäle (4a; 4d) eingeschnitten ist, die jeweils an einem Ende (4b; 4c) schräg im Winkel zur Lagerlängsachse abgewinkelt sind und den Rand der Grundplatte schräg anschneiden, und die am anderen Ende radial in eine tangential den Innenumfang (23) des zylindrischen Ringes (21) anschneidende Austrittsöffnung (22,; 25) übergehen, welche Austrittsöffnungen (22, 25) die Durchbrüche in der Zwischenplatte (3) bilden, wobei die beiden Zwischenplattenhälften (3a, 3b) spiegelbildlich mit ihren Grundplattenflächen (24) derart aufeinandergesetzt sind, daß die schräg zur Längsachse verlaufenden Kanalabschnitte (4b, 4c) miteinander fluchten.

2. Motorlager nach Anspruch 1, dadurch gekennzeichnet, daß die Zwischenplattenhälften (3a, 3b) am Außenumfang umlaufende Stege (30, 31; 32, 33) zur Abdichtung gegenüber dem Gehäuse (9) aufweisen.

3. Motorlager nach Anspruch 1 und 2, dadurch gekennzeichnet, daß zwischen Gehäuse (9) und äußerer Oberkante der Zwischenplattenhälfte (3a) sowie äußerer Unterkante der Zwischenplattenhälfte (3b) axial-radial wirkende Dichtungsringe (35, 36) eingeklemmt sind.

4. Motorlager nach Anspruch 3, dadurch gekennzeichnet, daß die Dichtungsringe (35, 36) einstückig an die Tragfeder (5) bzw. an die Kammerwandung (8) angeformt sind.

5. Motorlager nach Anspruch 1, dadurch gekennzeichnet, daß die Zwischenplattenhälften (3a, 3b) eine zentrale Öffnung (12) aufweisen, in der zwischen den beiden Plattenhälften (3a, 3b) eine gummielastische Entkopplungsmembran (14) eingespannt ist.

## Claims

1. Hydraulically damping two-chamber engine mounting, having an engine-side working chamber (1) and a compensating chamber (2) which is separated by an intermediate plate (3), the working chamber (1) and compensating chamber (2) being connected to one another via two axially superimposed channels (4a, 4d) which are cut into the cylindrical outer periphery of the intermediate plate (3) and are connected via a channel section (4b, 4c) extending obliquely relative to the longitudinal axis, the channels (4a, 4d) being covered by the inner wall of the cylindrically constructed mounting housing (9) as an outer-lying channel wall and the ends of the superimposed channels (4a, 4d) being connected via corresponding openings (22, 25) in the intermediate plate (3) on the one hand to the working chamber (1) and on the other hand to the compensating chamber (2), characterized in that the intermediate plate (3) is made up of two identical parts in such a way that each intermediate plate half (3a, 3b) has a flat base plate (20) and a cylindrical ring (21), which is mounted on the outer periphery and extends axially to one side and cut into whose outer surface over part of the periphery is in each case one of the outward-opening channels (4a; 4d) which in each case, at one end (4b; 4c), are bent obliquely at an angle to the mounting longitudinal axis and obliquely cut the edge of the base plate and, at the other end, verge radially into an outlet opening (22; 25) tangentially cutting the inner periphery (23) of the cylindrical ring (21), said outlet openings (22, 25) forming the openings in the intermediate plate (3), the two intermediate plate halves (3a, 3b) being placed in a mirror-inverted manner with their base plate surfaces (24) one on top of the other in such a way that the channel sections (4b, 4c) extending obliquely relative to the longitudinal axis are in alignment with one another.

2. Engine mounting according to claim 1, characterized in that the intermediate plate halves (3a, 3b) have, on the outer periphery, circumferential webs (30, 31; 32, 33) for sealing against the housing (9).

3. Engine mounting according to claim 1 and 2, characterized in that axially and radially effective sealing rings (35, 36) are clamped between the housing (9) and the outer top edge of the intermediate plate half (3a) as well as the outer bottom edge of the intermediate plate half (3b).

4. Engine mounting according to claim 3, characterized in that the sealing rings (35, 36) are integrally formed on the bearing spring (5) and the chamber wall (8) respectively.

5. Engine mounting according to claim 1, characterized in that the intermediate plate halves (3a, 3b) have a central opening (12), in which a rubber-elastic isolating diaphragm (14) is clamped between the two plate halves (3a, 3b).

## Revendications

1. Support de moteur à amortissement hydraulique à deux chambres, comportant une chambre de travail (1) du côté du moteur et une chambre de compensation (2) séparée par un plateau (3) intermédiaire, la chambre de travail (1) et la chambre de compensation (2) communiquant entre elles par deux canaux (4;4d) qui sont superposés axialement, qui sont ménagés dans le pourtour extérieur cylindrique du plateau (3) intermédiaire et qui communiquent par une partie de canal (4b, 4c) inclinée par rapport à l'axe longitudinal, les canaux (4a, 4d) étant recouverts par la paroi intérieure de l'enveloppe (9) cylindrique du support servant de paroi extérieure du canal et les extrémités des canaux (4a,4d) superposés communiquant, par des passages (22,25) adéquats ménagés dans le plateau (3) intermédiaire, d'une part avec la chambre de travail (1) et d'autre part avec la chambre de compensation (2), caractérisé en ce que le plateau (3) intermédiaire est constitué de deux parties identiques en sorte que chaque moitié (3a,3b) de plateau comporte une base (20) plane et un anneau (21) cylindrique posé sur le pourtour extérieur, s'étendant axialement d'un côté et dans la face extérieure duquel est ménagé, sur une partie du pourtour, respectivement l'un des canaux (4a;4d) ouverts vers l'extérieur qui, à une extrémité (4b,4c), sont coudés en faisant un angle avec l'axe longitudinal du support et attaquant en oblique le bord de la base et qui, à l'autre extrémité, se transforment radialement en un orifice (22;25) de sortie attaquant tangentiellement le pourtour (23) intérieur de l'anneau (21) cylindrique, ces orifices (22,25) de sortie formant les passages dans le plateau (3) intermédiaire, les deux moitiés (3a,3b) de plateau intermédiaire étant superposées avec une symétrie de miroir par leur face (24) de base de sorte que les parties (4b,4c) de canal, qui s'étendent en oblique par rapport à l'axe longitudinal, sont alignées.

2. Support de moteur suivant la revendication 1, caractérisé en ce que les moitiés (3,3b) de plateau intermédiaire comportent des nervures (30,31; 32,33) faisant le tour du pourtour extérieur et destinées à assurer l'étanchéité vis-à-vis de l'enveloppe (9).

3. Support de moteur suivant la revendication 1 ou 2, caractérisé en ce que, entre l'enveloppe (9) et le bord supérieur extérieur de la moitié (3a) du plateau intermédiaire, ainsi que le bord inférieur extérieur de la moitié (3b) du plateau intermédiaire, sont serrées des bagues d'étanchéité (35,36) à effet axial-radial.

4. Support de moteur suivant la revendication 3, caractérisé en ce que les bagues d'étanchéité (35,36) sont d'une pièce avec le ressort de suspension (5) ou avec la paroi (8) de la chambre.

5. Support de moteur suivant la revendication 1, caractérisé en ce que les moitiés (3a,3b) du plateau intermédiaire comportent une ouverture (12) centrale, dans laquelle une membrane (14) de découplage ayant l'élasticité du caoutchouc est bloquée entre les deux moitiés (3a,3b) de plateau.
